# EUROPÄISCHE PATENTANMELDUNG

(11) **EP 0 590 396 A2**
(43) Veröffentlichungstag der Anmeldung: **06.04.1994**
(21) Anmeldenummer: 93114638.5
(22) Anmeldetag: 11.09.1993
(51) Int. Cl.: B04C 1/00, B01D 45/12

(54) **Fliehkraftabscheider**

(30) Priorität: 17.09.1992 DE 4231150
(71) Anmelder: Schmitz, Hugo, D-59269 Beckum (DE)
(72) Erfinder: Schmitz, Hugo, D-59269 Beckum (DE)

(57) **Zusammenfassung**

Die Erfindung ist eine konstruktive Neugestaltung von Einrichtungen, in denen staubhaltige Gase in starke Rotation versetzt, wodurch Staubteilchen an die Umfangswand auszentrifugiert werden und anschließend aus dem System entfernt werden.
Durch kegelmantelförmige Seitenwände werden aufprallende Staubteilchen auf mittlere Strömungsbahnen innerhalb des Gehäuses reflektiert und von der Stromung bis zu Radien mitgenommen, wo sie die Zentrifugalbeschleunigung annehmen können, die zum Auszentrifugieren an die Umfangswand der Einrichtung erforderlich ist.
Durch Fliehkräfte nicht abscheidbare Staubteilchen sammeln sich im Kern der Wirbelsenke und werden von dort durch entsprechende Einrichtungen zu hochwertigen Abscheideeinrichtungen (E-Filter, Gaswäscher oder dergl.) transportiert und von diesen endgültig aus dem System entfernt.

## Beschreibung

Die Erfindung betrifft Fliehkraftabscheider entsprechend dem Oberbegriff des Anspruchs 1 der Anmeldung.

Derartige Abscheider sind aus der DD 276822 A1 und aus der US 513434 bekannt. Einrichtungen dieser Art sind Zyklone unterschiedlichster Konstruktion. Unabhängig von der jeweiligen Konstruktion ist die sich in den Zyklonen und ähnlichen Einrichtungen einstellende Strömungsform, nämlich: die mehr oder weniger stark ausgeprägte Wirbelsenke. Die besonderen Eigenschaften der Wirbelsenkenströmung sind in der Fachliteratur eingehend beschrieben - u.a.: Bruno Eck, _{"}Technische Strömungslehre" fünfte Auflage, Seiten 40-41 und 268-271.

Im Detail betrachtet, beruht der Abscheidemechanismus in Fliehkraftabscheidern u.a. darauf, daß die im rotierenden Gasstrom dispergierten Staubteilchen zunächst den Schleppkräften der Strömung in Richtung zum zentralen Auslaß folgen. Je weiter jedoch die Teilchen zum zentralen Auslaß mitgenommen werden, umso größer wird die auf die Teilchen wirksame Zentrifugalbeschleunigung. Beim Vordringen auf bestimmte Radien innerhalb des Gehäuses wird schließlich die Zentrifugalbeschleunigung der Teilchen größer als die Schleppkraft der Strömung. Es erfolgt eine Umkehr der Bewegungsrichtung der Teilchen: sie werden nicht mehr von der Strömung mitgenommen zum zentralen Auslaß, sondern sie werden auszentrifugiert an die Umfangswand der Einrichtung. Von dort werden diese auszentrifugierten Teilchen aus dem System entfernt.

In der Betriebspraxis, z.Beisp. bei Zyklon-Fliehkraftscheidern hat sich gezeigt, daß die zentral durch das Tauchrohr abgeführten Gase noch Staubteilchen enthalten, die offenbar vorher durch Fliehkräfte nicht auszentrifugiert und abgeschieden wurden.

Um diese Minderabscheideleistung zu korrigieren, wird z.Beisp. die Randschicht der Strömung im Tauchrohr getrennt abgesaugt und diese Teilgase werden mit den darin vorher durch Fliehkräfte nicht abgeschiedenen feinen Staubteilchen in einem nachgeschaltetem Abscheider gereinigt ( GB 2136326 A).

Bei einer anderen Einrichtung soll der gleiche Effekt erzielt werden durch die tangentiale Absaugung der Randströmung der das Fliehkraftgehäuse zentral verlassenden Gasströmung (DE 2815655 A1).

Die Nachreinigung der abgesaugten Gasströmung von den mitgeführten Staubteilchen soll in einem nachgeschaltetem Zyklon erfolgen.

Wenn Fliehkraftabscheider wegen unbefriedigender Abscheideleistungen, besonders der feinsten Staubteilchen als Vorabscheider zur Entlastung nachgeschalteter hochwertiger Abscheider (Elektroabscheider, Gewebefilter, Gaswäscher und dergl.) eingesetzt werden, müssen beide Einrichtungen für die gleiche Durchsatzleistung ausgelegt sein.

Aufgabe der Erfindung ist es, die Nachteile bisher bekannter Fliehkraftabscheider zu beseitigen und ihre Abscheideleistung so zu verbessern, daß sie auch als Primärabscheider eingesetzt werden können, wobei aber eine evtl. erforderliche, nachgeschaltete hochwertige Abscheideeinrichtung nur für den Bruchteil der Durchsatzleistung des Fliehkraftabscheiders ausgelegt sein muß.

Die Erfindung wird nachfolgend anhand von Ausführungsbeispielen unter Bezugnahme auf die Zeichnungen beschrieben. Es zeigen:
Fig. 1 den Schnitt C-D der Fig.2,
Fig. 2 den Schnitt A-B der Fig.1,
Fig. 3 ein Ausführungsbeispiel der Erfindung, bei dem die im Kern der Wirbelsenke angesammelten Feinststäube durch ein axial, im Innenraum angeordenetes Rohr 17 abgesaugt wird.
Fig. 4 die Ansicht G der Figur 3.

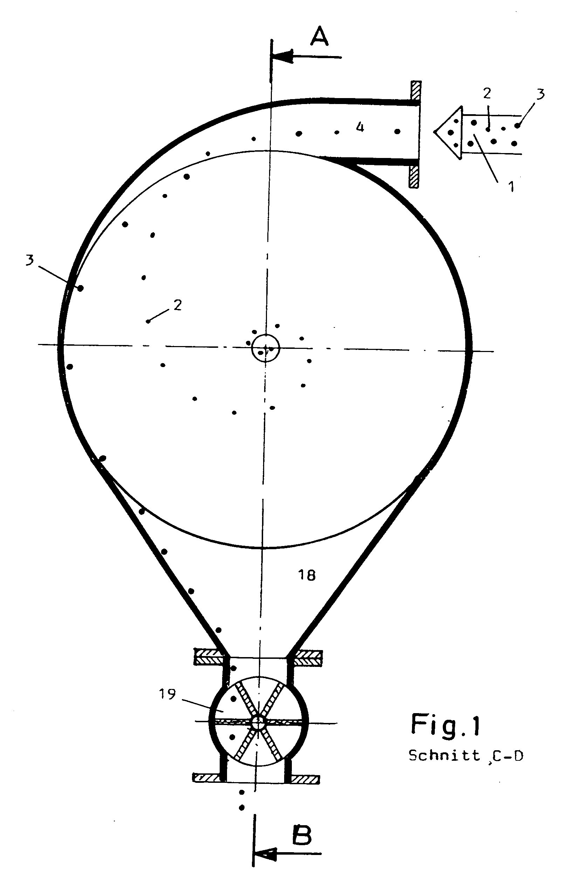

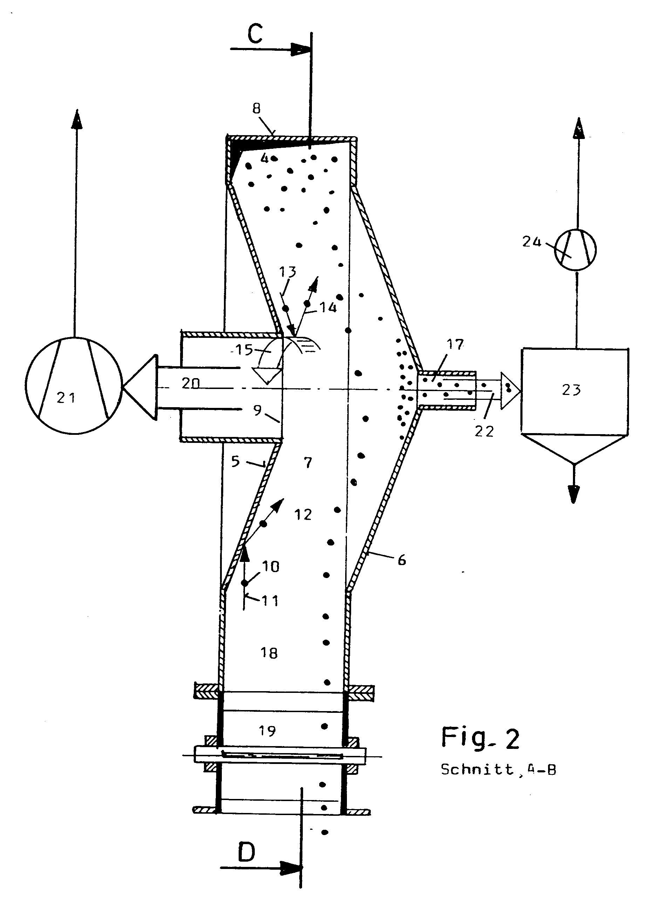

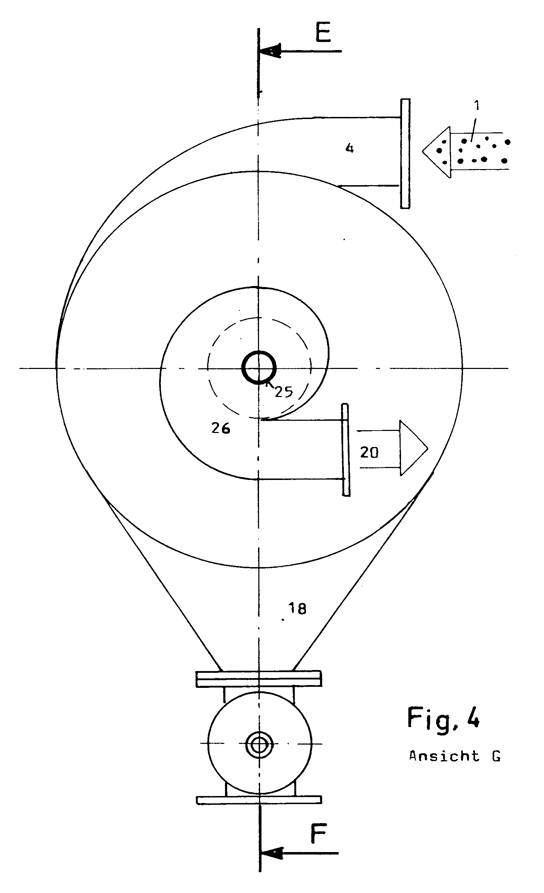

Gemäß Fig. 1 und 2 werden die Gase, dargestellt durch den Pfeil 1 (Fig. 4) mit darin enthaltenen feineren Staubteilchen 2 und größeren Staubteilchen 3 durch einen Einlaß 4, tangential einer von kegelmatelförmigen Wänden 5 und 6 gebildeten Kammer 7 zugeführt.

Dabei folgen die größeren Staubteilchen 3 der Umlenkung der Strömung weniger, sie werden alsbald an eine Umfangswand 8 ausgeschleudert und dann in eine Abscheidekammer 18 weitertransportiert.

Feinere Teilchen folgen zunächst den Schleppkräften der Strömung in Richtung zu einem zentralen Auslaß 9. Dabei werden z.Beisp. in Richtung des Pfeiles 11 beschleunigte Teilchen 10 beim Aufprallen auf die kegelige Begrenzungswand 5 etwa in Richtung des Pfeiles 12 reflektiert. Diese Reflexion der Teilchen erfolgt im gesamten Bereich der Begrenzungswand 5, so daß die Teilchen sich verstärkt in Richtung der Begrenzungswand 6 orientieren.

Je weiter die Teilchen von der Strömung in Richtung zum zentralen Auslaß 9 mitgenommen werden, umso größer wird auch die auf die Teilchen wirksame Zentrifugalbeschleunigung. Beim Vordringen auf bestimmte Radien innerhalb der Kammer 7 wird schließlich die Zentrifugalbeschleunigung der Teilchen größer als die Schleppkraft der Strömung. Es erfolgt eine Umkehr der Bewegungsrichtung der Teilchen: sie werden nicht mehr von der Strömung mitgenommen zum zentralen Auslaß 9, sondern sie werden auszentrifugiert an die Umfangswand 8.

Schematisch ist dieser Umkehrvorgang dargestellt in Fig.2 durch die Pfeile 13 und 14 sowie den gebogenen Pfeil 15. Auf dem durch den letzteren gekennzeichneten Radius ist die Zentrifugalbeschleunigung der Teilchen größer als die Schleppkraft bzw. der Reibungswiderstand der Strömung: die Teilchen werden auszentrifugiert an die Umfangswand 8. Von dort gelangen sie in die Abscheidekammer 18. Durch eine Austragvorrichtung, z.Beisp. eine Zellenschleuse 19, die den Innenraum gegen Falschluftzufuhr von Aussen abdichtet, werden die abgeschiedenen Teilchen aus der Einrichtung entfernt.

Die von Feststoffen gereinigten Gase 20 fördert ein Exhaustor 21 ins Freie.

Der Reinigung der Gase durch Auszentrifugieren und Abscheiden der Staubteilchen sind aber Grenzen gesetzt: bei sehr feinen Staubteilchen ist der Reibungswiderstand der Gasströmung größer als die den Teilchen mit vertretbarem Energieaufwand vermittelbare Zentrifugalbeschleunigung. Die in der Strömung dispergierten Teilchen folgen daher den Schleppkräften der Strömung. Sie orientieren sich zum Ort der höchsten Strömungsgeschwindikeit, d.h., zum Wirbelkern der Strömung.

Von diesem Ort müssen die Teilchen entfernt werden. Mit erfindungsgemäßen Einrichtungen wird diese Problem gelöst: Durch Versuche wurde bestätigt gefunden, daß durch die kegelförmige Ge-Staltung der Kammerwände 5 und 6 die durch Fliehkräfte nicht abscheidbaren feinsten Staubteilchen sich im Zentrum der Seitenwand 6 sammeln. Von dort müssen sie entfernt und einer nachgeschalteten hochwertigen Abscheideeinrichtung 23 zugeführt werden (Elektroabscheider, Gaswäscher oder dergl.).

Die Figuren 2 und 4 zeigen Beispiele für erfindungsgemäße Lösungen dieses Problems.

Nach Fig. 2 wird eine Teilgasmenge 22 zusammen mit den im Kern der Wirbelsenke konzentrierten Feinststäuben durch einen Rohrstutzen 17 abgeführt zur hochwertigen Abscheideeinrichtung 23.

Darin werden die Staubteilchen abgeschieden. Die gereinigten Gase fördert der Exhaustor 24 ins Freie.

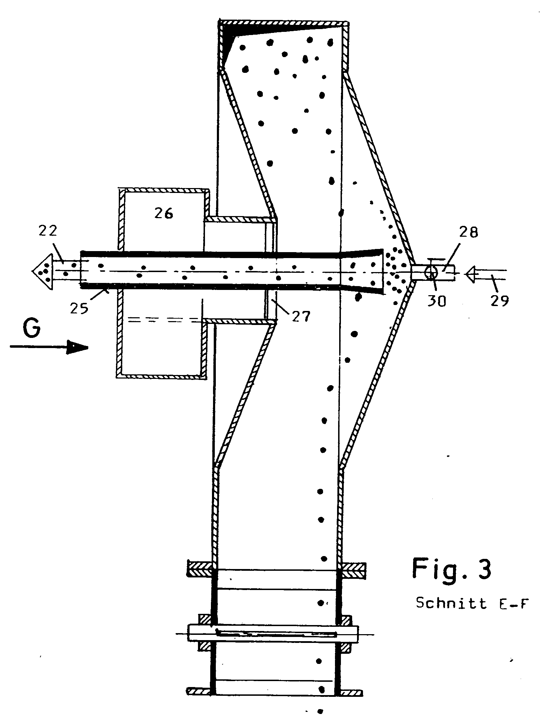

Die Figuren 3 und 4 zeigen eine Variante der Entfernung der durch Fliehkräfte nicht abscheidbaren Feinststäube aus der Einrichtung.

Eine solche Einrichtung kann in der Praxis aus Platzgründen zweckmäßig sein.

Die Entfernung der Gase und Feinststäube aus der Einrichtung erfolgt durch ein Rohr 25, das axial fixiert ist durch Leitbleche 27 und die Rückwand eines Spiralgehäuses 26. Bei dieser Ausführung ist es zweckmäßig, dem System eine geringe Luftmenge 29 über ein Rohr 28 zuzuführen. Dadurch wird eine permanente Anreicherung von Teilchen im Wirbelkern vermieden. Die Luftmenge kann durch eine Drosselklappe 30 reguliert werden.

Durch die besondere Konstruktion erfindungsgemäßer Einrichtungen wird die Qualität der Staubabscheidung durch Fliehkräfte bedeutend verbessert. Dadurch wird es ermöglicht, daß Fliehkraftabscheider auch als primäre Einrichtungen zur Abgasreinigung eingesetzt werden können. Die nachgeschaltete hochwertige Abscheideeinrichtung braucht dann aber nur noch für einen Bruchteil der Durchsatzleistung des Fliehkraftabscheiders ausgelegt zu sein.

Es ergeben sich dadurch bedeutende Kostenreduzierungen bei der Reinigung von Abgasen.

## Patentansprüche

1. Fliehkraftabscheider zur Abscheidung von Staub aus Gasen mittels eines kegelförmigen Gehäuses, wobei in einer von kegelmantelförmigen Seitenwänden begrenzten Kammer eine Wirbelsenke erzeugt wird,
dadurch gekennzeichnet,
daß auf einem Teil des Umfangs der Kammer (17) eine Abscheidekammer (18) für die Staubteilchen angeordnet ist, daß Einrichtungen zur Absaugung des Kerns der Wirbelsenkenströmung und diesen nachgeschaltete Abscheider (23) für die feinen Staubteilchen vorgesehen sind.

2. Fliehkraftabscheider nach Anspruch 1,
dadurch gekennzeichnet,
daß ein Absaugrohr (25) vorgesehen ist, und daß durch ein Rohr (28) im Mittelpunkt der Seitenwand (6) Zusatzluft zugeführt wird.

3. Fliehkraftabscheider nach Anspruch 2,
dadurch gekennzeichnet,
daß die Zusatzluft in regelbarer Menge zugeführt wird.
